# EUROPEAN PATENT APPLICATION

(11) **EP 4 039 452 A1**
(43) Date of publication of application: **10.08.2022**
(21) Application number: 21154939.9
(22) Date of filing: 03.02.2021
(51) Int. Cl.: B29C 65/08, B29C 65/78, A62B 18/10, A62B 18/02, B29L 31/48

(54) **MACHINE FOR WELDING RESPIRATOR VALVES AND PROCESS FOR PRODUCING RESPIRATORS**

(71) Applicant: Uniqon Protection AS, 5412 Stord (NO)
(72) Inventor: RISNES, KJELL LYDER, 5412 Stord (NO)
(74) Representative: Jannig & Repkow Patentanwälte PartG mbB

(57) **Abstract**

The present invention discloses a machine for welding respirator valves and a process for producing respirators, comprising a valve-welding mold (6), an ultrasonic generator (21), and a third pushing device (15). The valve-welding mold (6) is arranged below the ultrasonic generator (21), and the third pushing device (15) is able to elevate valve-welding mold (6) upwards. The production efficiency of respirators with a breather valve can be greatly improved by the use of the machine for welding respirator valves combined with the process for producing respirators.

## Description

### FIELD OF THE INVENTION

The present invention relates to respirator production apparatuses, in particular to a machine for welding respirator valves and a process for producing respirators.

### BACKGROUND OF THE INVENTION

Respirators with a breather valve are mainly produced by making the shape first and welding the breather valve manually, which limits the efficiency of the production of respirators.

### SUMMARY OF THE INVENTION

To resolve the defects in prior art, a machine for welding respirator valves and a process for producing respirators are provided in the present invention. The production efficiency of respirators with a breather valve can be greatly improved by the use of the machine for welding respirator valves combined with the process for producing respirators.

A machine for welding respirator valves, comprising a valve-welding mold, an ultrasonic generator, and a third pushing device, wherein the valve-welding mold is arranged below the ultrasonic generator and the third pushing device is able to elevate the valve-welding mold upwards.

In order to solve the above problems, the inventor has designed the technical proposal comprising a valve-welding mold, an ultrasonic generator, and a third pushing device. The valve-welding mold is arranged below the ultrasonic generator and the third pushing device is able to elevate the valve-welding mold upwards and downwards. When applying this proposal, pass the fabric through the space between the valve-welding mold and the ultrasonic generator, and put the breather valve into the valve-welding mold; start the third pushing device to push the valve-welding mold upwards to make the breather valve contact the fabric and fix it by ultrasonic welding. After welding, the output end of the third pushing device moves downwards, and the valve-welding mold falls to separate from the breather valve. In this way, the breather valve can be installed when the fabric is passed through the machine without affecting other steps of respirator production, which greatly improves the production efficiency of respirators.

Preferably, a connecting plate is provided. The valve-welding mold is set on a connecting plate in a sliding manner. The output shaft of the third pushing device can contact the valve-welding mold and push the valve-welding mold up and down on the connecting plate. In this technical proposal, a connecting plate is provided. The valve-welding mold is set on the connecting plate in a sliding manner. The output shaft of the third pushing device can contact the valve-welding mold so as to push the valve-welding mold to move up and down.

Preferably, a second pushing device is provided. The second pushing device connects to a connecting plate so that the connecting plate can be pushed to move up and down. After the output shaft of the third pushing device falls, the valve-welding mold is separated from the welded breather valve by the action of gravity. At this time, the separation between the valve-welding mold and the breather valve may be realized only by the gravity of the valve-welding mold itself, for the breather valve may be hung on the valve-welding mold. Therefore, a second pushing device is provided in this technical proposal. The second pushing device connects to a connecting plate, so that the connecting plate can be pushed to move up and down. When the valve-welding mold and the breather valve need to separate, the second pushing device drives the connecting plate downwards and exerts a downward force on the valve-welding mold so as to separate the valve-welding mold from the breather valve.

Preferably, a rotating device is provided. The rotating device connects to the output shaft of the second pushing device, and the output shaft of the rotating device is connected with the connecting plate. A plurality of valve-welding molds which is distributed circumferentially along the axis of the connecting plate are set on the connecting plate. One valve-welding mold only for welding breather valves is inefficient. In the technical proposal, a plurality of valve-welding molds are set on the connecting plate, and the rotating device is used to drive a plurality of valve-welding molds alternately for using, which improves the efficiency of the valve welding .

Preferably, a valve feeding mechanism is provided. The valve feeding mechanism comprises a support frame. Two valve retainers are set on the support frame, and a sliding groove is set on the inner walls of the valve retainers, so that the flange of the breather valve can be embedded inside the sliding groove. A first pushing device is fixed on the support frame, and the valve retainers are arranged above one of the valve-welding molds so that the first pushing device can push the breather valve on the valve retainers into the valve-welding mold. Since it is inefficient to manually put breather valves to the valve-welding mold, a valve feeding mechanism is provided in this technical proposal. The breather valve can be sent onto the valve retainers by the valve loading mechanism. The first pushing device is used to push the breather valve downwards, and the flange of the breather valve is deformed and separated from the valve retainers, and then enter the valve-welding mold, so as to realize automatic loading of breather valves.

Preferably, the output end of the third pushing device is connected with a pushing block. In this technical proposal, the output end of the third pushing device is connected with a pushing block. The area of the pushing block is large, and the pushing effect is better when it contacts the valve-welding molds.

A process for producing respirators, comprising a machine for welding respirator valves. The steps are as follows:
A. Pass a piece of fabric through the space between the valve-welding mold and the ultrasonic generator, and put a breather valve into the valve-welding mold;
B. Start the third pushing device, which push the valve-welding mold to move upwards to make the breather valve contact the fabric and fix it by ultrasonic welding;
C. After welding, the output end of the third pushing device moves downwards, and the valve-welding mold falls freely to separate from the welded breather valve.

In this technical proposal, pass a piece of fabric through the space between the valve-welding mold and the ultrasonic generator, and put the breather valve into the valve-welding mold; Start the third pushing device to push the valve-welding mold upwards to make the breather valve contact the fabric and fix it by ultrasonic welding. After welding, the output end of the third pushing device moves downward, and the valve-welding mold falls freely to separate from the weld breather valve. In this way, the breather valve can be installed when a piece of fabric is passed through the machine without affecting the other steps of respirator production, which greatly improves the production efficiency of respirators.

Preferably, the step B comprises the following sub-steps:
B1. Place a breather valve on the valve retainers by the valve loading mechanism and push the breather valve to move to above one of the valve-welding molds;
B2. Push the breather valve into the valve-welding mold below by the first pushing device;
B3. Start the rotating device to drive the connecting plate to rotate and make the valve-welding mold with the breather valve move to below the ultrasonic generator.

A plurality of valve-welding molds are set on the connecting plate in this technical proposal, and the rotating device is used to drive these valve-welding molds alternately for using, which improves the efficiency of the valve welding.

Preferably, the second pushing device starts and pushes the connecting plate to move downwards when the output end of the third pushing device in the step C moves downwards.

A second pushing device is provided in this technical proposal. When the valve-welding mold is separated from the breather valve, the second driving device provides assistance to separate the valve-welding mold from the breather valve.

Preferably, the fabric is punched before Step A. In this technical proposal, the fabric is punched before the welding of the breather valve so that only the shape making of respirators is required for production in the subsequent process, which further improves the production efficiency of respirators.

The beneficial effects of the invention are shown as follows: This technical proposal comprises a valve-welding mold, an ultrasonic generator, and a third pushing device. The valve-welding mold is arranged below the ultrasonic generator and the third pushing device is able to elevate the valve-welding mold upwards and downwards. When applying the technical proposal, pass a piece of fabric through the space between the valve-welding mold and the ultrasonic generator, and put the breather valve into the valve-welding mold; start the third pushing device to push the valve-welding mold upwards to make the breather valve contact the fabric and fix it by ultrasonic welding; After welding, the output end of the third pushing device moves downwards, and the valve-welding mold falls to separate from the breather valve. In this way, the breather valve can be installed when a piece of fabric is passed through the machine without affecting other steps of respirator production, which greatly improves the production efficiency of respirators.

### BRIEF DESCRIPTION OF THE DRAWINGS

In order to more clearly illustrate the specific embodiments of the invention or the technical proposals of prior art, a brief description of the drawings required in the specific embodiments or descriptions of the present technical proposal is given below. In all drawings, similar elements or parts are generally identified by similar marks. In the drawings, the elements or parts are not necessarily drawn as their actual proportions.
FIG. 1 is an overall structure diagram of the invention.
FIG. 2 is a main view of the invention;
FIG. 3 is a structure diagram of the breather valve in the invention.

In the drawings, 1 - breather valve, 2 - valve retainer, 3 - valve-pushing plate, 4 - the first pushing device, 5 - guide rail, 6 - valve-welding mold, 7 - connecting plate, 8 - axis of rotation, 9 - baffle plate, 10 - sensor, 11 - rotating device, 12 - the second pushing device, 13 - guide pillar, 14 - pushing block, 15 - the third pushing device, 16 - base plate, 17 - connecting shaft, 18 - top plate, 19 - fixed axis, 20 - drag plate, 21 - ultrasonic generator, 22 - sliding groove, 23 - flange.

### DETAILED DESCRIPTION OF THE PREFERRED EMBODIMENTS

The embodiments of the technical proposal of the invention are described in detail below in combination with the drawings. The following embodiments are only used to clearly describe the technical proposal of the invention. The following description is therefore exemplary in nature and is not intended to limit the scope of protection of the invention.

It is important to note that, unless otherwise indicated, all technical or scientific terms used in the specification or claims are in the common sense understood by those skilled in the art in which the invention belongs.

### Embodiment 1

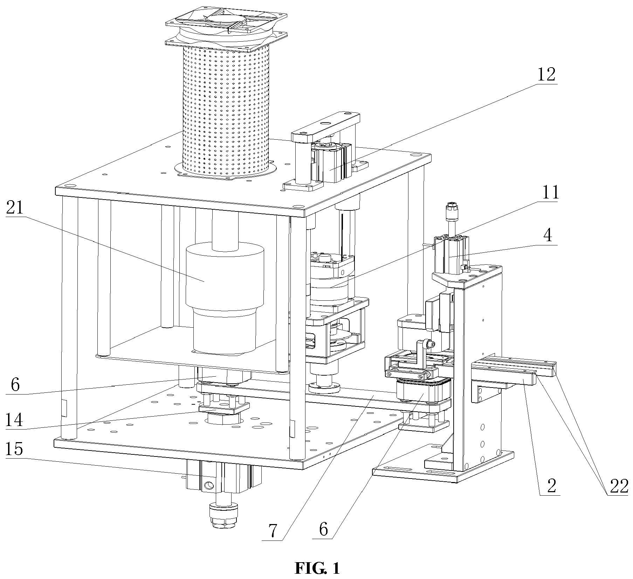

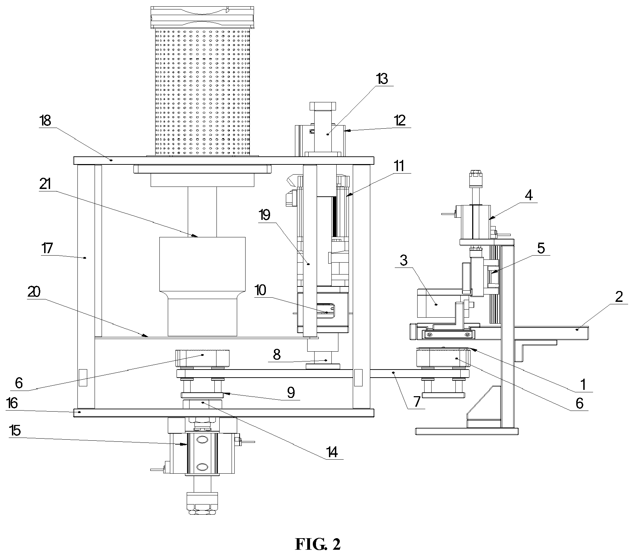

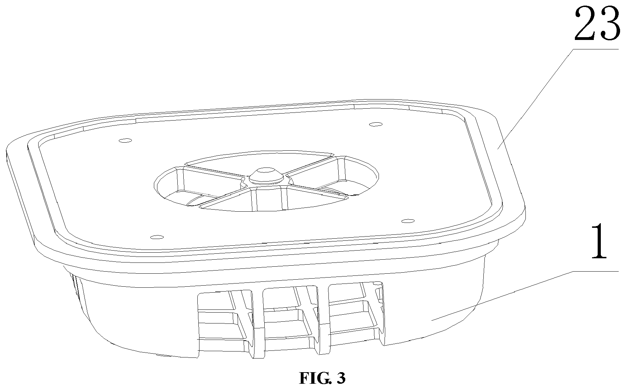

As shown in FIG. 1, 2, and 3, this embodiment comprises a valve-welding mold 6, an ultrasonic generator 21, and a third pushing device 5. The valve-welding mold 6 is arranged below the ultrasonic generator 21 and the third pushing device 15 is able to elevate the valve-welding mold 6 upwards.

In order to easily separate the valve-welding mold 6 from the breather valve 1, this embodiment comprises a connecting plate as well, and the valve-welding mold 6 is set on the connecting plate 7 in a sliding manner. The output shaft of the third pushing device 15 can contact the valve-welding mold 6 and push it to move up and down on the connecting plate 7. This embodiment comprises a second pushing device 12 as well, which is connected with the connecting plate 7 so that the connecting plate 7 can be pushed to move up and down.

In order to improve the welding efficiency of breather valves 1, the embodiment comprises a rotating device 12 as well, which is connected with the output shaft of the second pushing device 12, and the output shaft of the rotating device 11 is connected with the connecting plate 7. A plurality of valve-welding molds 6 which is distributed circumferentially along the axis of the connecting plate 7 are set on the connecting plate 7.

In order to improve the efficiency of loading breather valves 1 in the valve-welding mold 6, the embodiment comprises a valve feeding mechanism as well including a support frame. Two valve retainers 2 are set on the support frame, and sliding grooves 22 are set on the inner walls of the valve retainers 2, so that the flange 1 of the breather valve 1 can be embedded inside the sliding grooves 22. The first pushing device 4 is fixed on the support frame, and the valve retainers 2 are arranged above one of the valve-welding molds 6 so that the first pushing device 4 can push the breather valve 1 on the valve retainers 2 into the valve-welding mold 6.

The output end of the third pushing device 15 in this embodiment is connected with a pushing block 14.

This embodiment comprises a base plate 16, a top plate 18, and a drag plate 20. The base plate 16 top plate 18 are connected by a plurality of connecting shafts 17, with a drag plate 20 set between them. The drag plate 20 is connected with the top plate 18 by a fixed shaft 19. The third pushing device 15 is fixed on the base plate 16. The drag plate 20 is provided with a through-hole, and the ultrasonic generator 21 is set between the top plate 18 and the base plate 16. The ultrasonic wave emitted by the ultrasonic generator 21 can pass through the through-hole. The first pushing device 4, the second pushing device 12 and the third pushing device 15 are the first cylinder, the second cylinder and the third cylinder respectively.

In this embodiment, the output shaft of the second cylinder which is fixed on the top plate 18 runs through the top plate and is connected with a bearing frame. A plurality of guide pillars 13 whose top ends are connected by a retainer on the bearing frame run through the top plate 18. The rotating device 11 is a servo motor which is fixed on the bearing frame, and the output shaft of the servo motor is connected with the axis of rotation 8 which is connected to the connecting plate 7. Two valve-welding molds 6 are set. The sensors 10 that can detect whether the valve-welding mold 6 is right below the ultrasonic generator 21, are set on the bearing frame, so as to realize the precise positioning of the valve-welding mold 6.

In this embodiment, the bottom of the valve-welding mold 6 is connected with a sliding pillar which runs through the connecting plate 7. The bottom of the sliding pillar is connected with a baffle plate 9 which is connected with a pushing plate 14 so as to push the valve-welding mold 6 to move up and down.

In this embodiment, the output shaft of the first cylinder is connected with a valve-pushing plate 3 which can push the breather valve into the valve-welding mold 6. The area of the valve-pushing plate 3 is larger than that of the end face of the output shaft of the first cylinder so that the effect of the valve-pushing plate 3 to push the breather valve 1 is better. The valve-pushing plate 3 connects with a guide rail which is set on the support frame in a sliding manner.

### Embodiment 2

This embodiment is further explained on the basis of Embodiment 1. This embodiment provides a process for producing respirators, including a machine for welding respirator valves. The steps are as follows:
A. Pass a piece of fabric through the space between the valve-welding mold 6 and the ultrasonic generator 21, and put the breather valve 1 into the valve-welding mold 6;
B. Start the third pushing device 15, push the valve-welding mold 6 upwards to make the breather valve 1 contact the fabric and fix it by ultrasonic welding;
C. After welding, the output end of the third pushing device 15 moves downwards, and the valve-welding mold 6 falls to separate from the welded breather valve 1.

To further improve the efficiency of valve welding, Step B in this embodiment comprises the following sub-steps:
B1. Place the breather valve 1 on the valve retainers 2 by the valve loading mechanism and push the breather valve 1 to move to above one of the valve-welding molds 6;
B2. Push the breather valve 1 into the valve-welding mold 6 below by the first pushing device 4;
B3. Start the rotating device 11 to drive the connecting plate 7 to rotate so that the valve-welding mold 6 with a breather valve 1 move to below the ultrasonic generator 21.

To separate the valve-welding mold 6 from the breather valve 1, the second pushing device 15 starts and pushes the connecting plate 7 to move downwards when the output end of the third pushing device 12 in Step C moves downwards.

In this embodiment, the fabric is punched before the step A.

Finally, it should be noted that the above embodiments are used only to describe the technical proposal of the invention and are not intended to limit it; Notwithstanding the detailed description of the invention by reference to the foregoing embodiments, it is understood by those skilled in the art in which the invention belongs: the recorded technical proposal in the foregoing embodiments may be modified, or some or all of its technical features may be equivalently replaced; Such modifications or replacements do not make the nature of the corresponding technical proposal free from the scope of the technical proposal of the embodiments of the invention, which are covered in the scope of the patent claims and specifications of the invention.

## Claims

1. A machine for welding respirator valves, comprising a valve-welding mold (6), an ultrasonic generator (21), and a third pushing device (15), wherein the valve-welding mold (6) is arranged below the ultrasonic generator (21), and the third pushing device (15) is able to elevate the valve-welding mold (6) upwards.

2. The machine for welding respirator valves according to claim 1, comprising a connecting plate (7), wherein the valve-welding mold (6) is set on the connecting plate (7) in a sliding manner, the output shaft of the third pushing device (15) can contact the valve-welding mold (6) and push the valve-welding mold (6) to move up and down on the connecting plate (7).

3. The machine for welding respirator valves according to claim 2, comprising a second pushing device (12), wherein the pushing device is connected with the connecting plate (7), so that the second pushing device (12) can drive the connecting plate (7) to move up and down.

4. The machine for welding respirator valves according to claim 3, comprising a rotating device (11), wherein the rotating device is connected with the output shaft of the second pushing device (12), and the output shaft of the rotating device (11) is connected with the connecting plate (7); a plurality of valve-welding molds (6) are set on the connecting plate (7) circumferentially along the axis of the connecting plate (7).

5. The machine for welding respirator valves according to claim 4, comprising a valve feeding mechanism composed of a support frame, wherein two valve retainers (2) are set on the support frame, and a sliding groove (22) is set in the inner wall of the valve retainers (2), so that the flange (23) of a breather valve (1) can be embedded inside the sliding groove (22); a first pushing device (4) is fixed on the support frame, and the valve retainer (2) is arranged above one of the valve-welding molds (6) so that the first pushing device (4) can push the breather valve (1) on the valve retainers (2) into the valve-welding mold (6).

6. The machine for welding respirator valves according to claim 1, **characterized in that**, the output end of the third pushing device (15) is connected with a pushing block (14).

7. A process for producing respirators, comprising the machine as claimed in any one of claims 1 to 6, and the procedure is as follows:
A. Pass the fabric through the space between the valve-welding mold (6) and the ultrasonic generator (21), and put the breather valve (1) into the valve-welding mold (6);
B. Start the third pushing device (15) to push the valve-welding mold (6) upwards so as to make the breather valve (1) contact the fabric and fix it by ultrasonic welding;
C. After welding, the output end of the third pushing device (15) moves downwards, and the valve-welding mold (6) falls to separate from the welded breather valve (1).

8. The process for producing respirators according to claim 7, **characterized in that**, the step B comprises the following sub-steps:
B1. Put the breather valve (1) onto the valve retainers (2) by a valve loading mechanism and push the breather valve (1) to move to above one of the valve-welding molds (6);
B2. Push the breather valve (1) into the valve-welding mold (6) below by the first pushing device (4);
B3. Start the rotating device (11) to drive the connecting plate (7) to rotate, which makes the valve-welding mold (6) with a breather valve (1) move to below the ultrasonic generator (21).

9. The process for producing respirators according to claim 7, **characterized in that**, the second pushing device (12) starts to push the connecting plate (7) downwards when the output end of the third pushing device (15) as claimed in step C moves downwards.

10. The process for producing respirators according to claim 7, **characterized in that**, the fabric is punched before step A.
